# EUROPEAN PATENT SPECIFICATION

(11) **EP 1 641 332 B1**
(45) Date of publication and mention of the grant of the patent: **27.03.2013**
(21) Application number: 04736063.1
(22) Date of filing: 04.06.2004
(51) Int. Cl.: A01C 7/20, A01B 63/24

(54) **SOWING MACHINE**
SÄMASCHINE
SEMOIR

(30) Priority: 05.06.2003 FI 20030841
(43) Date of publication of application: 05.04.2006
(73) Proprietor: Vieskan Metalli Oy, 85200 Alavieska (FI)
(72) Inventor: KOUTONEN, Ari, 85200 Alavieska (FI)
(86) International application number: PCT/FI2004/000343
(87) International publication number: WO 2004/107842

(56) References cited:
- EP-A2- 0 704 147
- EP-A2- 0 928 553
- US-A- 4 506 609
- US-A- 4 600 060

## Description

### FIELD OF THE INVENTION

The invention is related to a sowing machine which includes a container and a frame connected thereto, a drawing device and rear wheel assemblies for carrying and moving the container and the frame, and coulter assemblies attached below the container.

### BACKGROUND OF THE INVENTION

Especially, the invention is applicable to a rear wheel supported sowing machine provided with a seed harrow, in which machine coulter assemblies attached below the container are provided with harrow tines. The machine is meant for seeding to plowed or tilled soil. The invention may be applied to other kind of coulter assemblies, too.

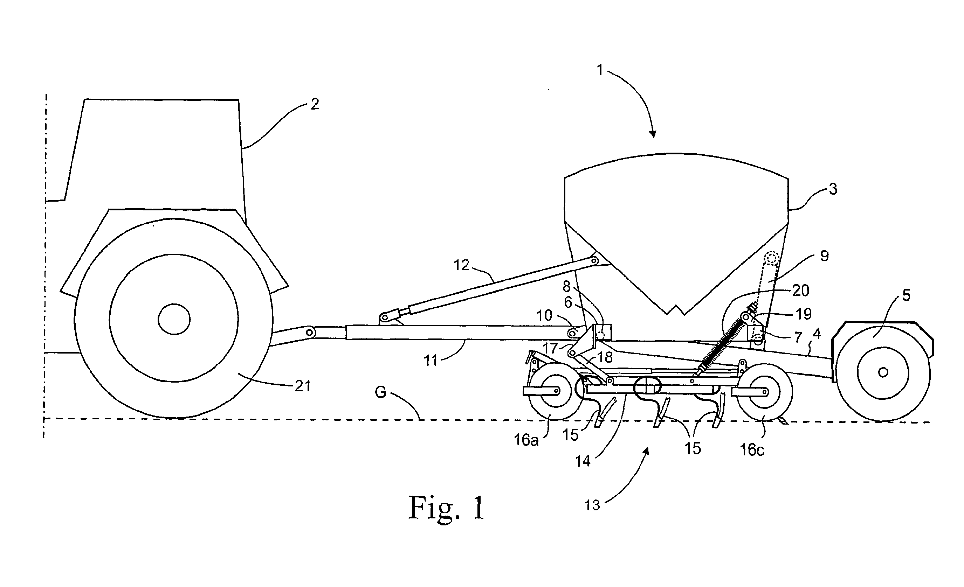

In rear wheel supported sowing machines, like the sowing machine of Fig. 1, the distance between the rear wheels of the drawing machine and the rear wheels of the sowing machine may be of the order of 5 meters. Soil surface contour may vary remarkably within this distance. Attachment solutions for coulter assemblies try to make the coulter assemblies to follow the soil surface. It is also desirable that the seeding depth would be all the time well enough within certain limits with all the coulters, i.e. also with the foremost and rearmost coulters. Moreover, it is desirable that enough pressure is obtained for the coulters according to need. In other words, such an arrangement is needed with which more or less of the weight of the sowing machine may be taken on the coulters. The pressure would also be as uniform as possible for as well the foremost as the central and the rearmost coulters.

From US patent 4432292 a solution is known in which the coulter units have been suspended on the frame of a sowing machine separately with parallel support arms. At the front in each coulter unit there is a leading wheel (gage wheel) on which the coulter unit is moving. Behind the leading wheel there is cultivating means (earthworking implement) for levelling and cleaning the earth and behind that means for making a seeding furrow (opening plough) which is set at a certain depth in relation to the leading wheel. At the rear there are a press wheel and a drag which are attached pivotally to the frame of the coulter unit, so that they follow the soil surface. Their function is to press seeds to the bottom of the seeding furrow and to level the seeding track, respectively, and they do not affect the seeding depth at all. A drawback of this solution is that the seeding depth is controlled by the front wheel which raises the earthworking implement up from soil e.g. if a stone, clod or other obstacle is put in the way. Suspending each coulter unit separately is also an expensive and hardly realisable solution.

Similar solutions are used in some sowing machines available in the market place. The coulter assemblies may be divided into coulter segments including several coulters. The coulter segments are suspended on the frame of the sowing machine by parallel support arms, and in the front of each coulter segment there is a wheel or a pair of wheels following the soil surface and determining the height at which the coulter segment is moving. The pressure setting of the coulter segment is arranged by its own hydraulic cylinder, for example. A problem is still that the coulter segment is following the height of the soil surface at the position of the wheel or pair of wheels in the front, and unevenness of the soil surface causes a significant variation of the seeding depth. This kind of coulter segments must also be quite narrow so that also lateral variations of the soil surface would be taken into account to some extent. As the number of the segments is large, the solution will be expensive. For stones, each wheel or pair of wheels may be provided with a shock absorber which further raises the costs of the solution.

Also such a solution is known in which a wheel determining the seeding depth is behind a coulter at a distance of about 0.5 meters from it. The problems of this kind of solution are essentially the same as with the solutions in which a wheel at the front of the coulters determines the seeding depth.

### SUMMARY OF THE INVENTION

An object of the invention is to provide such a solution for attaching the coulter assemblies which to large extent solves the problems described above.

To achieve this object, a sowing machine which includes a container and a frame To achieve this object, a sowing machine which includes a container and a frame connected thereto, a drawing device and rear wheel assemblies for carrying and moving the container and the frame, and coulter assemblies including several, e.g. of the order of twenty, coulters attached below the container, is characterised in that: the coulter assemblies are divided laterally into two or more separate coulter segments comprising several coulters on a frame, the frame being provided with two laterally spaced wheels either at the front or at the rear side and one wheel or two laterally spaced wheels at the other side; and the coulter segments are suspended on the frame of the sowing machine separately with pivotal and slidable suspensions so that the coulter segments are allowed to tilt on the wheels according to the soil surface both longitudinally and laterally.

In an embodiment of the invention, the suspension includes adjustable pressure setting means.

In another embodiment of the invention, the adjustable pressure setting means include an adjustable spring.

In a still further embodiment of the invention, the suspension includes at the front a suspension arm extending from the frame of the sowing machine down and backwards to the frame of the coulter segment and at the rear a suspension arm provided with a pressure setting spring and extending from the frame of the sowing machine down and forward to the frame of the coulter segment.

An advantage of the coulter assembly solution of the invention is that either four (wheels at both sides in the front and the rear) or three (wheels at both sides in the front or the rear and a third wheel at the rear or the front, respectively) points in a coulter segment follow the soil surface. In this way the coulters follow the soil surface in the whole better than in the solutions in which a wheel or a pair of wheels at the front or at the rear determines the height of a coulter segment and it is otherwise set e.g. as realised with parallel support arms longitudinally according to the frame of the sowing machine. The solution realised with parallel support arms does not allow a coulter segment to be set parallel with the soil surface either in the direction of moving or laterally. As the coulter segments follow the soil surface in the direction of moving and also laterally, they may well be wider than in the above mentioned solutions, for example. With the solution of the invention, the coulter assemblies may be realised in a quite simple manner, and the number of parts needed is small. A general problem is that the resistance directed to the foremost coulter tines causes a torsion which reduces the pressure on the rearmost coulters. This problem is to large extent removed and the pressure on the coulters is made uniform in the embodiment of the invention in which the suspension include suspension arms provided with a pressure setting spring and extending from the frame of the sowing machine down and forward to the frame of the coulter segment.

### BRIEF DESCRIPTION OF THE DRAWINGS

The invention and some embodiments thereof are described in the following in further detail with reference to the accompanying drawings, in which:
Fig. 1 presents a possible realisation of a sowing machine according to the invention in side view;
Fig. 2 presents the coulter assemblies of Fig. 1 in side view and without the nearest wheels;
Fig. 3 presents a possible realisation of the coulter assemblies in plan view without suspending implements; and
Fig. 4 presents another possible realisation of the coulter assemblies in plan view without suspending implements.

### DETAILED DESCRIPTION OF THE INVENTION

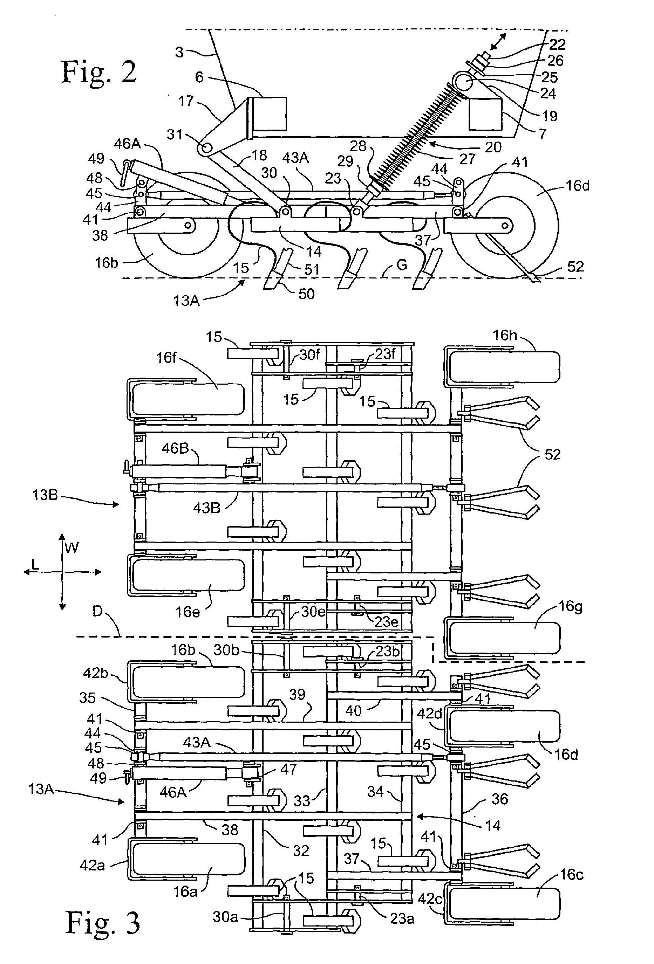

The sowing machine 1 of Fig. 1 includes a container 3 which is here described only schematically and without side plates and many other parts. The container 3 is provided with frame beams 6 and 7 and other necessary supporting structures. The sowing machine is moving on the rear wheels 5 and the drawing implement 11 attached to a drawing machine 2 at 10. The rear wheel assembly 5 is attached by means of beams 4 pivotally to the container 3 at 8. Below the container, coulter assemblies 13 are suspended which are divided laterally into segments as is indicated by broken line D in Fig. 3.

The coulter segments 13 are suspended at the front with suspending arms 18, which extend from a projection 17 attached to the frame beam 6 down and backwards to the frame 14 of the coulter segment, and at the rear with suspending arms 20 provided with a pressure setting spring and extending from a projection 19 attached to the frame beam 7 to the frame of the coulter segment. With pressure cylinders 9 working between the beams 4 and the container 3 and, on the other hand, a pressure cylinder 12 working between the drawing implement 11 and the container, the angles of the drawing implement 11 and the beams 4 in relation to the container, respectively, may be changed so that the container is raised. Then, also the coulter segments 13 are lifted off from the soil surface G and the weight of the sowing machine is totally on the wheels 21 of the drawing machine 2 and the rear wheels 5 of the sowing machine.

The details of the structure of the coulter segments and the suspension are indicated in Figs. 2 and 3. The suspending arm 18 is attached to the projection 17 and the frame 14 of the coulter segment by pivotal attachments 31 and 30, respectively. The suspending arm 20 is attached to the projection 19 and the frame 14 of the coulter segment by pivotal attachments 24 and 23, respectively. The arm section 22 of the suspending arm 20 is attached slidably to the pivotal attachment 24. Between a counterplate 28 close to the lower end of the arm and the projection 19 there is a spring 27 the force of which may be adjusted by moving the counterplate 28 by means of nuts 29. With adjustable springs, the portion of the weight of the sowing machine may be set which is taken on the coulter assemblies. The coulter assemblies must have weight so that the means which make seeding furrow are surely penetrated into the desired depth in the soil. Increasing weight on the coulter assemblies is necessary as the seeding bed is difficult to work. At the upper end of the arm 22 there are nuts 26 and a counterplate 25 which support the arm as the coulters are lifted off from the ground.

In the example of Fig. 3, the coulter assemblies are divided to two segments 13A and 13B each of which include ten coulters 15. The coulters are provided with a working blade 50 which is moving at a certain depth from the soil surface and makes a furrow for seeding. Seeds or fertilisers are fed from the container 3 into the furrow by means of tubes 51 which are only partially presented in Figs. 1 and 2.

In Fig. 3, many details are indicated by reference signs only in relation to the segment 13A. The shape and structure of the segment 13B are not fully similar to those of the segment 13A but it includes corresponding parts. For stepped attachment of the coulters the frame 14 includes three bars 32, 33 and 34. They are connected with bars 37, 38, 39 and 40 to the ends of which corresponding frames 35, 42a, 42b and 36, 42c, 42d of the wheels are attached with pivotal attachments 41. A reaction bar 43A is attached with pivotal attachments 45 to the projections 44 extending upwards from the frames of the wheels, and at the side of the frame 35, an adjustment arm 46A, the length of which is adjusted by turning with a handle 49, is attached with corresponding pivotal attachments 48 and 47 to the projection 44 and the frame 14 of the coulter segment. By means of the adjustment arm 46A and the reaction bar 43A (46A and 43B, respectively, in the segment 13B) the distance of the frame 14 from the soil surface may be adjusted and set it equal at the front and at the rear. Drags 52 are attached to the frame tube 36 of the rear wheels for covering the seeding furrows of the last coulters of the stepped coulter assembly.

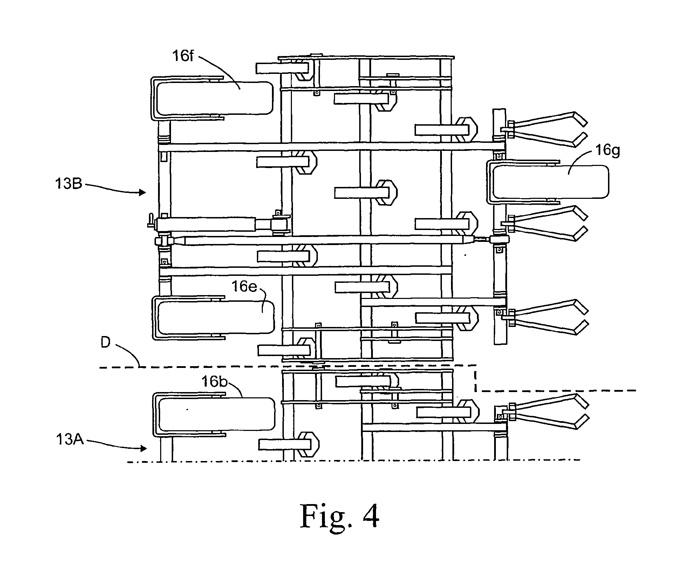

The solution according to the invention may be realised also so that the coulter segment has two wheels at either the front or the rear, i.e. wheels at both sides, and only one wheel at the rear or the front, respectively. In Fig. 4, a solution is presented which is otherwise similar to the solution of Figs. 2 and 3 but the coulter segment 13B has wheels 16e and 16f at the front at both sides and only one wheel 16g at the rear. The arrangement may be similar in the other coulter segment 13A which is presented only partially in Fig. 4.

In the preferred embodiment of the invention, coulter segments 13A and 13B has the wheels 42a, 42b, 42c, 42d and 42e, 42f, 42g, 42h, respectively, at a distance from each other at the front and at the rear (close to the corners of the segments), and the segments are suspended at both sides with suspension arms 18 at points 30a, 30b and 30e, 30f, respectively, and with suspension arms 20 at points 23a, 23b and 23e and 23f, respectively. The suspension makes possible that the position of the coulter segment, as the sowing machine is moving, is determined only according to the soil surface, i.e. according to the points of the soil surface which are under the wheels. The coulter segment may be tilted to various positions as well laterally as longitudinally, and its position is not at all dependent on the position of the frame of the sowing machine. The solution is operating essentially similarly in the embodiment in which there are two wheels only at the front or at the rear. Then, the position in the lateral direction is determined according to that end (either the front or the rear) in which there are wheels at both sides.

Of course, there may be more coulter segments than two. The coulters may also be other kind of coulters, e.g. disc coulters. The frame of the coulter segments and the related adjustment of the seeding depth may be realised in various ways. It is also obvious for a person skilled in the art that the separate suspension of the segments, which allows the coulter segments to be set according to the soil surface both longitudinally and laterally, may be realised in many other ways. It may include hydraulically or pneumatically operating parts, for example. E.g. the adjustable springs described above could be replaced by hydraulic cylinders or pressure accumulators.

The invention may vary within the scope of the accompanying claims.

## Claims

1. A sowing machine which includes a container (3) and a frame (6, 7) connected thereto, a drawing device (11) and rear wheel assemblies (5) for carrying and moving the container and the frame, and coulter assemblies (13) including several, e.g. of the order of twenty, coulters (15) attached below the container (3), **characterised in that**:
the coulter assemblies are divided laterally into two or more separate coulter segments (13A, 13B) comprising several coulters (15) on a frame (14), the frame being provided with two laterally spaced wheels either at the front (16a, 16b; 16e, 16f) or at the rear side (16c, 16d; 16g, 16h) and one wheel (16g) or two laterally spaced wheels (16c, 16d; 16g, 16h; 16a, 16b; 16e, 16f) at the other side; and
the coulter segments (13A, 13B) are suspended from the frame (6, 7) of the sowing machine separately with pivotal and slidable suspensions (18, 20; 23a, 23b, 30a, 30b; 23e, 23f, 30e, 30f) so that the coulter segments (13A, 13B) are allowed to tilt on the wheels according to the soil surface both longitudinally and laterally (L, W).

2. A sowing machine according to claim 1, **characterised in that** the suspension includes adjustable pressure setting means (20).

3. A sowing machine according to claim 4, **characterised in that** the adjustable pressure setting means include an adjustable spring (27).

4. A sowing machine according to claim 1, **characterised in that** the suspensions include at the front a suspension arm (19) extending from the frame (6, 17) of the sowing machine down and backwards to the frame (14, 30) of the coulter segment and at the rear a suspension arm (20) provided with a pressure setting spring (27) and extending from the frame (7, 19) of the sowing machine down and forward to the frame (14, 23) of the coulter segment.

## Patentansprüche

1. Sämaschine, die einen Behälter (3) und einen damit verbundenen Rahmen (6, 7), eine Zugvorrichtung (11) und Hinterräderwerk (5) enthält, zum Tragen und Fördern des Behälters und des Rahmens, sowie eine Säschargruppe (13), bestehend aus mehreren Säscharen (15), beispielsweise zwanzig Stück, die unterhalb des Behälters (3) angebracht sind, **dadurch gekennzeichnet, dass**:
die Säschargruppe seitlich in zwei oder mehrere separate Säschareinheiten (13A, 13B) geteilt ist, die jeweils mehrere Säscharen (15) enthalten und die von dem Rahmen (14) getragen werden, welcher Rahmen mit zwei seitlich voneinander entfernt liegenden Rädern entweder an der Vorderkante (16a, 16b; 16e, 16f) oder an der Hinterkante (16c, 16d; 16g, 16h) und mit einem Rad (16g) oder mit zwei seitlich voneinander entfernt liegenden Rädern (16c, 16d; 16g, 16h; 16a, 16b; 16e, 16f) an einer Seite versehen sind; und
die Säschareinheiten (13A, 13B) an dem Rahmen der Sämaschine (6, 7) angehängt sind und mit separat sich drehenden und gleitenden Hängevorrichtungen (18, 20; 23a, 23b, 30a, 30b; 23e, 23f, 30e, 30f) versehen sind, so dass dadurch das Neigen der Säschareinheiten (13A, 13B) auf Rädern nach der Oberfläche des Erdbodens möglich ist, sowohl in der Längs- als auch in der seitlichen Richtung (L, W).

2. Sämaschine gemäß Anspruch 1, **dadurch gekennzeichnet, dass** die Hängevorrichtung verstellbare Senkvorrichtungen (20) enthält.

3. Sämaschine gemäß Anspruch 2, **dadurch gekennzeichnet, dass** die verstellbaren Senkvorrichtungen eine verstellbare Feder (27) enthalten.

4. Sämaschine gemäß Anspruch 1, **dadurch gekennzeichnet, dass** die Hängevorrichtung vorne vom Rahmen (6, 17) der Sämaschine schräg nach unten, nach hinten bis zum Rahmen (14, 30) der Säschareinheit reichenden Hängearm (19) und hinten mit einer Senkfeder (27) versehenen und vom Rahmen (7, 19) der Sämaschine schräg nach unten, nach vorne bis zum Rahmen (14, 23) der Säschareinheit reichenden Hängearm (20) enthält.

## Revendications

1. Semoir qui comprend un conteneur (3) et un cadre (6, 7) raccordé à celui-ci, un dispositif d'attelage (11) et des montages de roues arrières (5) pour porter et déplacer le conteneur et le cadre, et des assemblages de coutres (13) comprenant plusieurs, par exemple de l'ordre de vingt, coutres (15) fixés au-dessous du conteneur (3), **caractérisé en ce que**:
les assemblages de coutres sont divisés latéralement en deux ou plusieurs segments séparés de coutres (13A, 13B) comprenant plusieurs coutres (15) sur un cadre (14), le cadre étant muni de deux roues espacées latéralement à l'avant (16a, 16b; 16e, 16f) ou à l'arrière (16c, 16d; 16g, 16h) et d'une (16g) et de deux roues espacées latéralement (16c, 16d; 16g, 16h; 16a, 16b; 16e, 16f) sur l'autre coté ; et
les segments de coutres (13A, 13B) sont suspendus au cadre (6, 7) du semoir séparément avec des suspensions pivotants et coulissants (18, 20; 23a, 23b, 30a, 30b; 23e, 23f, 30e, 30f) de sorte que le segment de coutre (13A, 13B) peut basculer sur les roues selon la surface du sol longitudinalement et latéralement (L, W).

2. Semoir selon la revendication 1, **caractérisé en ce que** la suspension comprend des moyens de réglage (20) de la pression.

3. Semoir selon la revendication 4, **caractérisé en ce que** les moyens de réglage de la pression incluent un ressort ajustable (27).

4. Semoir selon la revendication 1, **caractérisé en ce que** les suspensions comprennent à l'avant un bras de suspension (19) s'étendant à partir du cadre (6, 17) du semoir vers le bas et vers l'arrière au cadre (14, 30) du segment de coutre et à l'arrière un bras de suspension (20) muni d'un ressort de réglage de pression (27) et s'étendant depuis le cadre (7, 19) du semoir vers le bas et vers l'avant au cadre (14, 23) du segment de coutres.
